# EUROPEAN PATENT APPLICATION

(11) **EP 4 832 080 A1**
(43) Date of publication of application: **28.10.2026**
(21) Application number: 24907954.2
(22) Date of filing: 10.12.2024
(51) Int. Cl.: H01M 4/36, H01M 4/38, H01M 4/587, H01M 4/62, H01M 10/052, C01B 33/02, C01B 32/168, H01M 4/02

(54) **NEGATIVE ELECTRODE MATERIAL FOR LITHIUM SECONDARY BATTERY AND METHOD OF MANUFACTURING SAME**

(30) Priority: 18.12.2023 KR 20230185111
(71) Applicant: POSCO Holdings Inc., Pohang-si, Gyeongsangbuk-do 37859 (KR); Posco Future M Co., Ltd., Pohang-si, Gyeongsangbuk-do 37918 (KR)
(72) Inventor: YOU, Seung-Jae, Pohang-si, Gyeongsangbuk-do 37877 (KR); WOO, Jung-Gyu, Pohang-si, Gyeongsangbuk-do 37877 (KR); KIM, Dae-Hyun, Pohang-si, Gyeongsangbuk-do 37877 (KR); JO, Hyun-Chul, Pohang-si, Gyeongsangbuk-do 37877 (KR); LEE, Jae-Yoon, Sejong 30003 (KR)
(74) Representative: Pfenning, Meinig & Partner mbB
(86) International application number: PCT/KR2024/020196
(87) International publication number: WO 2025/135670

(57) **Abstract**

The negative electrode material for a lithium secondary battery of the present invention comprises a silicon-carbon composite including: silicon nanoparticles; crystalline carbon; carbon nanotubes; and first amorphous carbon, wherein the silicon nanoparticles, the crystalline carbon, and the carbon nanotubes are dispersed on the first amorphous carbon, and the minimum pore size inside the composite is more than 10 nm and 30 nm or less.

## Description

### Technical Field

The present disclosure relates to a negative electrode material for a lithium secondary battery and a method of manufacturing the same.

### Background Art

A lithium secondary battery is a secondary battery which is generally comprised of a positive electrode containing a positive electrode material, a negative electrode containing a negative electrode material, a separator, and an electrolyte, and is charged and discharged by intercalation-decalation of lithium ions. Lithium secondary batteries have the advantages of high energy density, high electromotive force, and high capacity, and are therefore applied to devices within various fields, such as mobile devices, electric vehicles, and hybrid electric vehicles.

Metal oxides such as LiCoO₂, LiMnO₂, LiMn₂O₄, or LiCrO₂ are used as positive electrode materials constituting a positive electrode of a lithium secondary battery, and metal lithium, carbon-based materials such as graphite, or activated carbon, and metal-based materials such as silicon oxide (SiOx) are used as negative electrode materials constituting a negative electrode thereof.

As the carbon-based negative electrode material, various types of materials are used, such as natural graphite and artificial graphite, which are crystalline carbon-based materials, or hard carbon and soft carbon, which are amorphous carbon-based materials. Thereamong, a graphite-based negative electrode material, having excellent reversibility, which is advantageous for the lifespan characteristics of a lithium secondary battery, is the most widely used.

However, the graphite-based negative electrode material has a relatively low theoretical capacity value (e.g., approximately 372 mAh/g for a LiC₆ negative electrode), which is still somewhat insufficient to satisfy the electrochemical properties required in the relevant market.

Therefore, many researchers have been interested in group IV elements (Si, Ge, Sn) in the periodic table, and thereamong, Si, in particular, is attracting attention as a very attractive material due to the very high theoretical capacity (Li₁₅Si₄: 3600 mAh/g) and low operating voltage (~0.1 V vs. Li/Li+) thereof. However, Si may undergo significant volumetric expansion and contraction due to a reaction with lithium during silicon charging and discharging, which may result in micronization of a silicon active material powder and poor electrical contact between the silicon active material powder and a current collector. Due to this phenomenon, a lithium secondary battery containing Si has a problem in that the capacity may rapidly decrease as charge and discharge cycles thereof progress.

### Summary of Invention

### Technical Problem

An aspect of the present disclosure is to provide a negative electrode material for a lithium secondary battery that can secure high capacity characteristics and excellent lifespan characteristics, and a method of manufacturing the same.

An object of the present disclosure is not limited to the above description. The object of the present disclosure will be understood from the entirety of the contents of the present specification, and a person skilled in the art to which the present disclosure pertains will understand an additional object of the present disclosure without difficulty.

### Solution to Problem

According to an aspect of the present disclosure, a negative electrode material for a lithium secondary battery may include a silicon-carbon composite including: silicon nanoparticles; crystalline carbon; carbon nanotubes; and first amorphous carbon, wherein the silicon nanoparticles, the crystalline carbon, and the carbon nanotubes may be dispersed in the first amorphous carbon, and a size of minimum pores inside the composite may be greater than 10 nm and less than or equal to 30 nm.

The crystalline carbon may be at least one of artificial graphite, flake graphite, amorphous graphite, CNTs, and graphene.

The carbon nanotubes may be included in an amount of 0.10 wt% or more and 0.60 wt% or less with respect toa total weight of the negative electrode material.

A specific surface area of the carbon nanotubes may be 500 m²/g or more and 800 m²/g or less.

Bulk density of the carbon nanotubes may be 0.04 g/cc or more and 0.09 g/cc or less.

The first amorphous carbon may be carbonized pitch having a ratio of fixed carbon of 30% or more and a beta-resin value of 15% or more.

The negative electrode material for a lithium secondary battery may further include a second amorphous carbon layer having the silicon-carbon composite as a core, and covering a surface of the silicon-carbon composite.

The negative electrode material for a lithium secondary battery may have a specific surface area of less than 6 m²/g.

According to another aspect of the present disclosure, a method of manufacturing a negative electrode material for a lithium secondary battery may include operations of: preparing silicon nanoparticles; obtaining a mixture by adding crystalline carbon, carbon nanotubes, and pitch to the silicon nanoparticles and then mixing the same; obtaining a molded body by press-molding the mixture; carbonizing the molded body; and pulverizing and classifying the molded body, wherein the press-molding may be performed at a pressure of 0.40 ton/cm² or more and less than 0.90 ton/cm².

The crystalline carbon may be at least one of artificial graphite, flake graphite, amorphous graphite, CNTs, and graphene.

The pitch may have a ratio of fixed carbon of 30% or more and a beta resin value (β-resin value) of 15% or more.

The mixing may be performed through a milling process mediated by contact with powder.

The pulverizing may be a dry pulverizing process.

The method for manufacturing a negative electrode material for a lithium secondary battery may further include an operation of carbon coating the surface of the manufactured negative electrode material.

### Advantageous Effects of Invention

According to the present disclosure, by forming a rigid, high-density carbon layer, a negative electrode material that can suppress the expansion of silicon nanoparticles, and drastically reduce the specific surface area may be provided.

As a result, the negative electrode material obtained from the negative electrode material of the present disclosure may secure high capacity characteristics and excellent lifespan characteristics.

### Brief Description of Drawings

FIG. 1 illustrates a FIB-SEM image for cross-sectional images of respective Comparative Examples and Examples according to uniaxial press-molding conditions.
FIG. 2 is a graph illustrating the particle strength of respective Comparative Examples and Examples.
FIG. 3 is a graph illustrating results of changes in a specific surface area and pore distribution of respective Comparative Examples and Examples.

### Best Mode for Invention

Hereinafter, preferred embodiments of the present disclosure will be described. However, the embodiments of the present disclosure may be modified in various other forms, and the scope of the present disclosure is not limited to the embodiments described below.

In the present specification, the term "including" is used to indicate that other components may be included, rather than excluding other components, unless specifically stated otherwise.

In addition, unless otherwise specified, a unit of % refers to a weight %.

It should be noted that, although not essential, the technical solution according to each aspect of the present disclosure may also be usefully applied to technical solutions of other aspects. In addition, the composition and various useful parameters according to each aspect of the present disclosure may be appropriately combined with other aspects to obtain advantageous effects.

Since large volumetric expansion and contraction occur due to the reaction with lithium during silicon charging and discharging, a lithium secondary battery including a silicon-based negative electrode material has a problem in that its capacity may rapidly decrease as charge/discharge cycles are repeated.

To solve the above-described problem, the inventors of the present disclosure have found that, when forming a rigid, high-density carbon layer, not only may a contact path between silicon nanoparticles and a conductive material be strengthened, but the expansion of silicon nanoparticles may also be controlled.

In addition, the inventors of the present disclosure have also discovered that as described above controlling a size of minimum pores inside a silicon-carbon composite is effective as a method for forming a rigid, high-density carbon layer.

In addition thereto, the inventors of the present disclosure have also discovered that, when carbon nanotubes are included in the negative electrode material, the high capacity characteristics of the negative electrode material may be maintained while the lifespan characteristics of the negative electrode material may be improved, and thus derived the present disclosure.

From this point of view, a negative electrode material for a lithium secondary battery according to an embodiment of the present disclosure may include a silicon-carbon composite including silicon nanoparticles; crystalline carbon; carbon nanotubes; and first amorphous carbon, wherein the silicon nanoparticles, the crystalline carbon, and the carbon nanotubes may be dispersed in the first amorphous carbon. Hereinafter, each component is described in detail below.

The silicon-carbon composite according to an example of the present disclosure may include silicon nanoparticles.

As a non-limiting example, a D50 particle size of the silicon nanoparticles may be less than 150 nm. In this specification, D50 refers to a particle size corresponding to 50% of a volumetric cumulative of particle size distribution. Thus, by suppressing the expansion of the silicon nanoparticles with respect to the negative electrode material according to an example of the present disclosure, reversible charging and discharging may be performed without cracking. On the other hand, when the D50 particle size of the silicon nanoparticles is excessively small, as the number of silicon nanoparticles included in the negative electrode material increases excessively, a specific surface area thereof increases, which may make it difficult to be captured by first amorphous carbon described later. In addition thereto, in a non-limiting example of the present disclosure, a lower limit of the D50 particle size of the silicon nanoparticles may be set to be 100 nm for the purpose of securing high capacity characteristics of the negative electrode material.

A negative electrode material for a lithium secondary battery according to an embodiment of the present disclosure may secure high capacity characteristics of the negative electrode material, by containing 45 wt% or more of the silicon nanoparticles. More specifically, the content of the silicon nanoparticles may be 50 wt% or more. On the other hand, when the silicon nanoparticles are excessively included within the negative electrode material, the silicon nanoparticles and crystalline carbon described later may not be completely surrounded by a carbon coating layer, either individually or as a whole, and in this case, a structure of the negative electrode material, which is a silicon-carbon composite, may collapse. For this reason, in an embodiment of the present disclosure, the silicon nanoparticles may be included in an amount of 60 wt% or less, relative to the total weight of the negative electrode material for a lithium secondary battery. More specifically, the content of the silicon nanoparticles may be 55 wt% or less.

The silicon-carbon composite according to an example of the present disclosure may include crystalline carbon, in addition to the silicon nanoparticles. Since the conductivity of the negative electrode material may be improved through the crystalline carbon, the negative electrode material according to an example of the present disclosure may increase the cycling efficiency during repeated charging and discharging by including the crystalline carbon.

As an example, the crystalline carbon may be at least one of artificial graphite, flake graphite, amorphous graphite, expandable graphite, and graphene.

For the above-described purpose, in an example of the present disclosure, the crystalline carbon may be included in an amount of 10 wt% or more, with respect to a total weight of a negative electrode material for a lithium secondary battery. More specifically, the crystalline carbon may be included in an amount of 15 wt% or more with respect to the total weight of the negative electrode material. However, when the amount becomes excessive, capturing by first amorphous carbon may become difficult, so in an embodiment of the present disclosure, a weight ratio of the crystalline carbon may be set to be 20 wt% or less, with respect to the total weight of the negative electrode material.

The silicon-carbon composite according to an embodiment of the present disclosure may include carbon nanotubes. The carbon nanotubes have excellent electrical and mechanical properties and can help improve the lifespan characteristics of the negative electrode material. To achieve the above-described purpose, in a non-limiting example of the present disclosure, the carbon nanotubes may be included in an amount of 0.10 wt% or more, with respect to the total weight of the negative electrode material. In another example, the carbon nanotubes may be included in an amount of 0.20 wt% or more, and in another example, the carbon nanotubes may be included in an amount of 0.30 wt% or more. However, when an excessive amount of carbon nanotubes is included within the negative electrode material, as carbon nanotubes that are not dispersed in the first amorphous carbon described below may undergo self-reactions as charge/discharge cycles are repeated, thereby adversely affecting the lifespan characteristics of the negative electrode material. In consideration thereof, in an example of the present disclosure, an upper limit of the content of the carbon nanotubes may be set to be 0.60%. In another example, the carbon nanotubes may be included in an amount of 0.50 wt%

In addition, a specific surface area of the carbon nanotubes may be 500 m²/g or more and 800 m²/g or less. That is, in an example of the present disclosure, carbon nanotubes having a specific area of 500 m²/g or more may be included in the negative electrode material, to enhance conductivity within Si-C particles and improve structural stability of the particles. On the other hand, when the specific surface area of the carbon nanotubes increases excessively, an excessive amount of pitch is required to capture the carbon nanotubes, and this may lead to a decrease in the performance of the negative electrode material. In addition, excess carbon nanotubes, which are not captured may increase a specific surface area of the Si-C particles themselves, causing side reactions with an electrolyte and leading to performance degradation, and therefore, in an example of the present disclosure, an upper limit of the specific surface area may be set to be 800 m²/g. In another example, the specific surface area may be 600 m²/g to 700 m²/g or 650 m²/g to 680 m²/g.

In an example, bulk density of the carbon nanotubes may be 0.04 g/cc or more and 0.09 g/cc or less. That is, in order to enhance conductivity within Si-C particles and improve structural stability of the particles, in an example of the present disclosure, carbon nanotubes having the bulk density of 0.04 g/cc or more may be included in the negative electrode material. On the other hand, when the bulk density of the carbon nanotubes excessively increases, an excessive amount of pitch is required to capture the carbon nanotubes, which may lead to a decrease in the performance of the negative electrode material. In addition, when the bulk density is excessively high, the weight of the carbon nanotubes to be dispersed increases, and due to the resulting decrease in the content of silicon, the desired high capacity may not be achieved. Therefore, in an example of the present disclosure, an upper limit of the bulk density may be 0.09 g/cc. In another example, the bulk density may be 0.05 g/cc to 0.08 g/cc or 0.06 g/cc to 0.07 g/cc.

Meanwhile, the silicon-carbon composite according to an example of the present disclosure may include first amorphous carbon, and the silicon nanoparticles, the crystalline carbon, and the carbon nanotubes may be dispersed in the first amorphous carbon. Therefore, the first amorphous carbon may control the expansion of the silicon nanoparticles while strengthening a contact path between the silicon nanoparticles, the crystalline carbon, and the carbon nanotubes.

In addition, the first amorphous carbon according to an example of the present disclosure may be carbonized pitch having a ratio of fixed carbon of 30% or more. In this case, the pitch may include coal-based pitch and petroleum-based pitch.

As a value of fixed carbon of the pitch increases, a conductive path with silicon nanoparticles having low intrinsic conductivity may be created, thereby inducing an increase in capacity and efficiency thereof. In addition, when the value of fixed carbon satisfies the above-described range, internal pores of the negative electrode material of the present embodiment may be reduced. Accordingly, side reactions with an electrolyte may also be reduced, which can contribute to an increase in the initial efficiency of the battery. To this end, in an example of the present disclosure, a lower limit of the ratio of fixed carbon of the first amorphous carbon may be 30%, and in another example, the lower limit of the ratio of fixed carbon thereof may be 40% or 50%.

In addition thereto, the first amorphous carbon according to an embodiment of the present disclosure may be carbonized pitch having a beta resin value (β-resin value) of 15% or more.

Specifically, the beta-resin value refers to a value obtained by subtracting quinoline-soluble capacity from benzene-insoluble capacity. This beta-resin value is proportional to cohesiveness. According to an embodiment of the present disclosure, when using coal-based pitch or petroleum-based pitch in which the beta resin (β-resin) value satisfies the above-described range, a porous structure of the silicon-carbon composite may be maintained more stably. Accordingly, in an embodiment of the present disclosure, a lithium secondary battery having excellent lifespan characteristics and electrode plate expansion characteristics may be implemented. In another example, the beta resin value of the pitch may be 20% or more.

A silicon-carbon composite according to an example of the present disclosure may have a minimum pore size inside the composite of exceeding 10 nm. In this case, the minimum pore size may be obtained using a nitrogen adsorption method, and may refer to a size of pores, initially measured through DFT pore analysis. A negative electrode material for a lithium secondary battery according to an example of the present disclosure may provide a dense carbon layer in which micropores are absent by making the minimum pore size inside the composite greater than a certain level. Therefore, the expansion of silicon nanoparticles may be controlled, and as a result, the negative electrode material according to an embodiment of the present disclosure may exhibit high-capacity characteristics and excellent lifespan characteristics.

On the other hand, when the minimum pore size increases excessively, the lifespan may deteriorate due to side reactions between the exposed nano silicon and electrolyte, so the minimum size of the pores inside the composite according to a non-limiting example of the present disclosure may be 30 nm or less. In another example, the minimum size of the pores inside the composite may be 12 nm to 25 nm, and in another example, the minimum size of the pores inside the composite may be 15 nm to 20 nm.

Meanwhile, according to another example of the present disclosure, the negative electrode material for a lithium secondary battery may further include a second amorphous carbon layer having a silicon-carbon composite including silicon nanoparticles, crystalline carbon, carbon nanotubes, and first amorphous carbon, as a core, as described above, and covering a surface of the silicon-carbon composite.

The second amorphous carbon layer may refer to a coating layer in which a carbon-based material is carbonized, and an example of the carbon-based material may include petroleum pitch, coal tar, PAA, and PVA with a softening point of lower than 250°C. Such a second amorphous carbon layer may serve to minimize side reactions with an electrolyte by finally carbon-coating silicon nanoparticles exposed on the surface during a pulverizing process, such as a jet mill of Si-C particles.

Hereinafter, a negative electrode material for a lithium secondary battery according to an embodiment of the present disclosure including all or part of the above-described components is described.

The negative electrode material for a lithium secondary battery an embodiment of the present disclosure may have a D50 particle size of 8.0 µm or more and 15.0 µm or less.

In addition, as described above, the negative electrode material according to an example of the present disclosure may exhibit a low specific surface area, by providing a high-density carbon layer. More specifically, the specific surface area of the negative electrode material according to an example of the present disclosure may be less than 6 m²/g. In another example, the specific surface area may be less than 5 m²/g or less than 4.5 m²/g.

Hereinafter, a method for manufacturing a negative electrode material for a lithium secondary battery according to the present disclosure will be described. However, it should be noted that the following method for manufacturing a negative electrode material for a lithium secondary battery is merely an example, and the negative electrode material for a lithium secondary battery of the present disclosure should not necessarily be manufactured by the present manufacturing method, and any manufacturing method, satisfying the claims of the present disclosure may be used to implement each embodiment of the present disclosure without any problem.

The method for manufacturing a negative electrode material for a lithium secondary battery according to an example of the present disclosure may include operations of: preparing silicon nanoparticles; obtaining a mixture by adding crystalline carbon, carbon nanotubes, and pitch to the silicon nanoparticles and then mixing the same; obtaining a molded body by press-molding the mixture; and pulverizing and classifying the molded body. Hereinafter, each operation is described in detail below.

First, in an embodiment of the present disclosure, silicon nanoparticles may be prepared. According to a non-limiting example of the present disclosure, such silicon nanoparticles may be obtained by pulverizing a silicon raw material (poly-Si) through mechanical milling.

In addition, as an example, the mechanical milling may be performed using stabilized zirconia. In addition, to improve nano-processing efficiency, suppress the generation of fine particles, and prevent silicon particles from oxidizing, a size of the zirconia beads may be less than twice a size of D99 of the silicon raw material being introduced thereinto, but the zirconia beads used can be utilized in process design in various sizes, so they are not limited thereto.

Other detailed conditions for mechanical milling are matters that a person of ordinary skill in the art may sufficiently design according to the purpose, so they are not specifically limited. However, as an example, a Ball Per Ratio (BPR) of the silicon raw material to the stabilized zirconia ball may be set to be 5:1, and a rotational speed of an internal rotor of a pulverizer may be maintained at 2500 rpm.

According to an example of the present disclosure, a solvent in the mechanical milling may be an organic solvent such as ethanol or IPA to prevent oxidation of the silicon raw material.

The D50 of the silicon nanoparticles obtained by the pulverizing may be 100 nm or more and less than 150 nm. Since this has been described above in relation to the negative electrode material, it will be omitted.

Next, in an embodiment of the present disclosure, crystalline carbon, carbon nanotubes, and pitch may be added to silicon nanoparticles obtained according to the above description, and then mixed to obtain a mixture.

The crystalline carbon may be at least one of artificial graphite, flake graphite, amorphous graphite, expandable graphite, and graphene, and the pitch may have a ratio of fixed carbon of 30% or more, and a beta resin value (β-resin value) of 15% or more.

The mixing of the silicon nanoparticles, the crystalline carbon, the carbon nanotubes, and the pitch may be performed simultaneously, but at least two of the four thereof may be mixed first, and then the remainder thereof may be mixed.

According to an embodiment of the present disclosure, when the silicon nanoparticles, the crystalline carbon, and the carbon nanotubes are mixed first and then the pitch is added thereto, a mixture of the silicon nanoparticles, the crystalline carbon and the carbon nanotubes may be spray-dried to remove a solvent, and the pitch may be added to the spray-dried body obtained thereby, and then mixed to obtain a negative electrode material precursor.

In addition, as a non-limiting example, a central particle size (D50) of the crystalline carbon may be smaller than a central particle size of the spray-dried body, so that the crystalline carbon may be completely captured within the spray-dried body, and the central particle size (D50) of the crystalline carbon may be 5 µm to 10 µm.

In addition, the mixing may be performed through a milling process through a contact with powder, and as a non-limiting example, the mixing may be performed through mechanofusion or a ball mill. As described above, when performing a milling process mediated by contact with powder, there is an advantage in that the independent flow of silicon nanoparticles may be reduced when mixed with a solvent.

Next, a method for manufacturing a negative electrode material for a lithium secondary battery according to an example of the present disclosure may include an operation obtaining a molded body by press-molding the mixture.

In addition, according to a non-limiting example, a pressure of 0.40 ton/cm² or more and 0.90 ton/cm² or less may be applied during the press-molding. That is, in an example of the present disclosure, a high-density carbon layer may be provided. As a result, in an example of the present disclosure, not only can micropores within the negative electrode material be removed, but the coverage of a surface of the silicon nanoparticle may also be increased as the silicon nanoparticles are sufficiently covered by an internal carbon layer. As a result, a negative electrode material with excellent electrochemical performance may be provided. As another example, the pressure may be 0.60 ton/cm² or more. On the other hand, when a pressure exceeding 0.90 ton/cm² is applied, the strength of the negative electrode material may increase, and thus the generation of fine powder during subsequent pulverization may increase. Therefore, as described above, in the present invention, the pressure during press-molding may be 0.90 ton/cm² or less. In another example, the pressure may be less than 0.80 ton/cm² or less than 0.70 ton/cm².

In the present disclosure, by carbonizing the molded body at a temperature of 800°C or higher, not only can volatile components existing within the existing precursor be evaporated, but a pitch may also be hardened to secure an internal structure of the negative electrode material. In addition, when the temperature becomes excessively too high during carbonization, the capacity and efficiency may be reduced due to the generation of silicon carbide and silicon nitride, not having electrochemical performance, and therefore, the carbonization may be performed within a temperature range of 1000°C or lower. In particular, the carbonization may be performed in an inert atmosphere to prevent the silicon particles from oxidizing.

Thus, after carbonization, according to the method for manufacturing a negative electrode material for a lithium secondary battery according to an embodiment of the present disclosure, the molded body can be pulverized and classified. Thereby, a negative electrode material of a desired size may be obtained. As a non-limiting example, the pulverizing may be performed by dry pulverizing, and the dry pulverizing may be performed using a jet mill or a pin mill.

As described above, after obtaining a negative electrode material by pulverizing and classifying the molded body, in an example of the present disclosure, an operation of carbon coating a surface of the negative electrode material may be further included.

The operation of carbon coating may be performed by adding a carbon-based material and heat treating the same, and the carbon-based material may be at least one of petroleum pitch, coal tar, PAA, and PVA with a softening point of lower than 250°C. In addition, although not limited thereto, the coating may be performed using a twisted blade mixer. In this case, process variables include time, rotational speed, and the like, but considering that these are matters that a person skilled in the art can design appropriately for the purpose, they are not described in the present disclosure. Hereinafter, a method for manufacturing a negative electrode of a lithium secondary battery of the present disclosure will be described in detail.

The negative electrode may be manufactured by mixing a negative electrode material manufactured according to an embodiment of the present disclosure, a binder, and optionally a conductive material to manufacture a composition for forming a negative electrode material layer, and then applying the composition to a negative electrode current collector.

The negative electrode current collector may be, for example, copper foil, nickel foil, stainless steel, titanium foil, nickel foam, copper foam, a polymer substrate coated with a conductive metal, or a combination thereof.

As the binder, polyacrylic acid, polyvinyl alcohol, carboxymethyl cellulose/styrene-butadiene rubber, hydroxypropylene cellulose, diacetylene cellulose, polyvinyl chloride, polyvinylpyrrolidone, polytetrafluoroethylene, polyvinylidene fluoride, polyethylene, polypropylene, or the like may be used, but the present disclosure is not limited thereto. The binder may be mixed in an amount of 1 wt% to 30 wt% based on the total amount of the composition for forming the negative electrode material layer.

The conductive material is not particularly limited as long as it has conductivity without causing a chemical change in the battery, and specifically, graphite such as natural graphite or artificial graphite; carbon black such as acetylene black, Ketjen black, channel black, furnace black, lamp black, or thermal black; conductive fibers such as carbon fiber or metal fiber; metal powders such as fluorocarbon, aluminum, or nickel powder; conductive whiskey such as zinc oxide or potassium titanate; conductive metal oxides such as titanium oxide; and conductive materials such as polyphenylene derivatives may be used. The conductive material may be mixed in an amount of 0.1 wt% to 30 wt% with respect to the total amount of the composition for forming the negative electrode material layer.

Hereinafter, the present disclosure will be specifically described through the following Examples. However, it should be noted that the following examples are only for describing the present disclosure by illustration, and not intended to limit the right scope of the present disclosure. The reason is that the right scope of the present disclosure is determined by the matters described in the claims and reasonably inferred therefrom.

### Mode for Invention

### (Example 1)

### (1) Preparation of Negative electrode material

First, mechanical milling was performed on a silicon raw material for 12 hours. A D50 particle size of silicon nanoparticles obtained accordingly was 115 nm. A slurry of the prepared silicon nanoparticles was added at a content of 53 wt% with respect to a weight of a final negative electrode material, and graphite in the form of flakes and carbon nanotubes having a center particle size of 8 µm were added at a content of 18 wt% and 0.50 wt%, respectively, and dispersed using a high-speed mixer. The physical properties of carbon nanotubes added thereto are the same as shown in Table 1 below. Thereafter, a spray-dried precursor having a central particle size of approximately 20 µm was synthesized and then was mixed with pitch powder. To form a carbon support of the powder, powder was loaded into a mold of a specific size, and uniaxial press-molding was performed at the pressure shown in Table 2 below. A ratio of fixed carbon of the pitch powder was 77.71%, and a beta resin value thereof was 28.1%. A block obtained from a press-molding process was heat-treated at a temperature of 950°C in an inert atmosphere to prevent oxidation of silicon nanoparticles, then pulverized into a range of 10 µm to 15 µm based on D50 using a jet mill, and an equal amount of coal tar in a range of 5 wt% to 10 wt%, relative to the input amount of silicon nanoparticles was added and stirred with a twisted blade mixer for about 30 minutes, followed by heat treatment in an inert atmosphere, lower than 1000°C, and finally obtained a negative electrode material through sieving with a #635 mesh (20 µm).

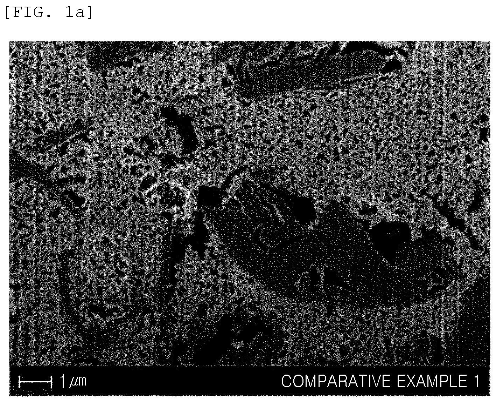

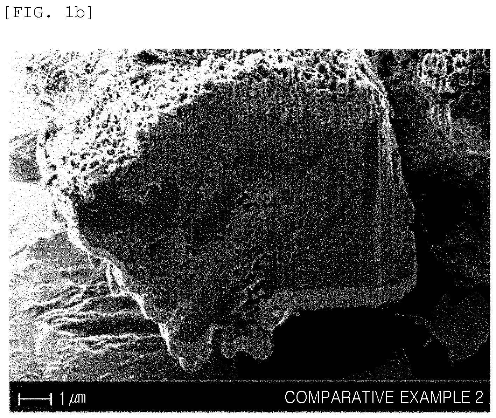

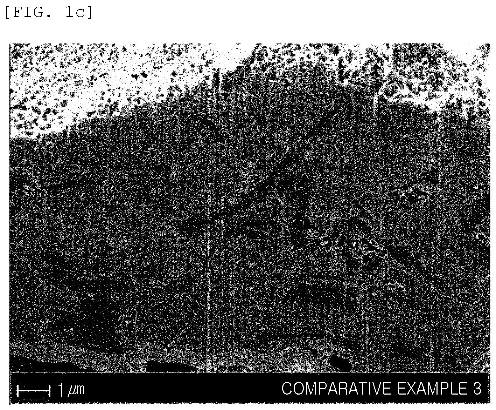

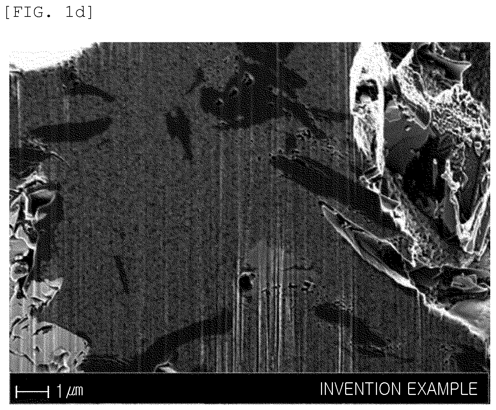

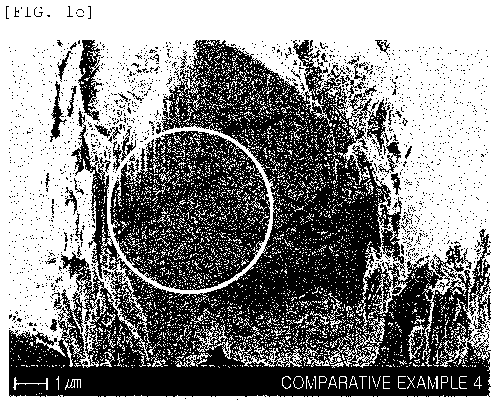

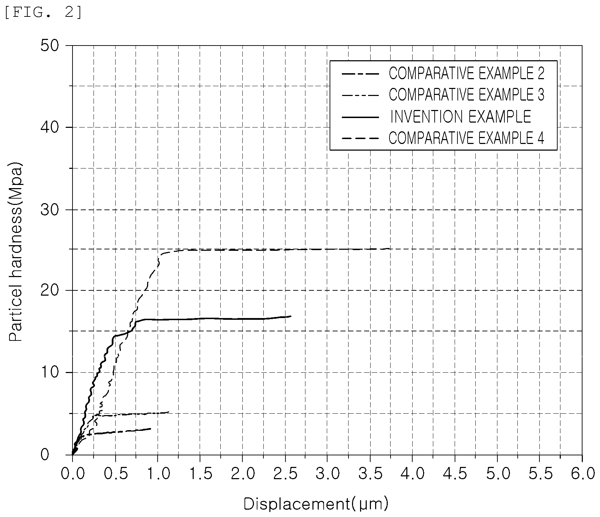

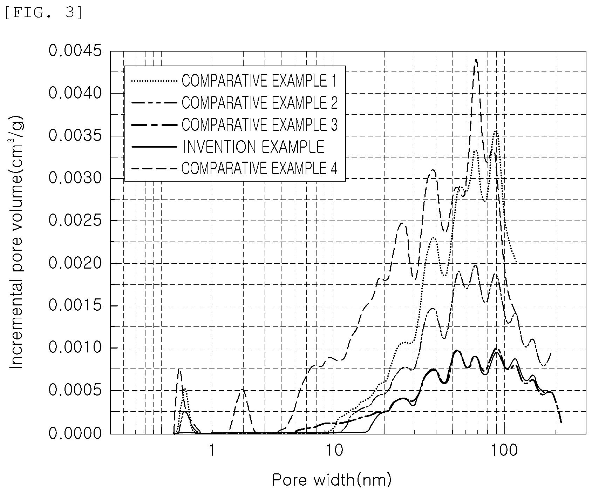

A FIB-SEM image for cross-sectional images of respective Examples were shown in FIG. 1 below. In addition, the particle strength was measured and shown as a graph in FIG. 2 below. In addition, results of changes in a specific surface area and pore distribution of respective Examples were shown in FIG. 3 below.

In this case, the specific surface area refers to a BET specific surface area, and the results of the changes in the specific surface area and pore distribution in FIG. 3 were measured using a 3Flex analyzer from Micromeritics. In addition, the particle strength was measured using the MCT-W500 (Micro particle Compression Test) from SHIMADZU.

**[Table 1]**

| | |
|---|---|
| Specific surface area (m²/g) | 645 |
| bulk density (g/cc) | 0.057 |

**[Table 2]**

| | Comparative Example 1 | Comparative Example 2 | Comparative Example 3 | Inventive Example | Comparative Example 4 |
|---|---|---|---|---|---|
| Pressure (ton/cm²) | 0 | 0.13 | 0.38 | 0.64 | 0.96 |

### (2) Electrochemical Evaluation

A 2032 coin cell-type half-cell was prepared by mixing the prepared negative electrode material and commercial spherical natural graphite at 15 wt% and 85 wt%, respectively, and designing a negative electrode capacity to a target value of 550 mAh/g. A composition of the negative electrode was comprised of active material : conductive material : CMC : SBR = 96.1 : 1 : 1.7 : 1.2, and a loading amount was maintained at 7 mg/cm², and a rolling density was maintained at 1.35 g/cc. For the lifespan test, an electrolyte of EC : EMC = 3 : 7 (1.0M LiPF6) + VC 1.5 wt% + FEC 7 wt% was used. The discharge capacity and initial efficiency of the battery were measured and shown in Table 3 below. In this case, current during charging and discharging was measured as 0.1C during an initial cycle. In addition, based on the first 1C capacity, current of 0.5C was applied during charging and discharging to measure the lifespan of 50^{th} cycles. In this case, charging cut-off current was set to be 0.005C, and discharging cut-off voltage was set to be 1.0V.

An expansion rate of the mixed electrode was measured by fully charging the 2032 coil cell-type half-cell to 0.005V (0.005C cutoff) after the 50^{th} cycles were completed, using the 2032 coin cell-type half-cell, and then disassembling the half-cell and measuring a thickness of the charged electrode.

**[Table 3]**

| Classification | Mixed electrode | | | | |
|---|---|---|---|---|---|
| | Specific surface area (m²/g) | Discharge capacity (mAh/g) | Initial efficiency (%) | Lifespan (%) | Expansion rate (%) |
| Comparative Example 1 | 12.78 | 481 | 84.1 | 47.2 | 128.4 |
| Comparative Example 2 | 9.32 | 540 | 89.7 | 78.5 | 74.2 |
| Comparative Example 3 | 7.07 | 551 | 90.2 | 79.5 | 67.0 |
| Inventive Example | 4.03 | 554 | 90.2 | 87.1 | 56.7 |
| Comparative Example 4 | 5.57 | 544 | 89.8 | 81.4 | 61.1 |

As described above, FIG. 1 is a FIB-SEM image of a cross-sectional image of each Example according to uniaxial press-molding conditions. Looking at FIG. 1a to FIG. 1e, it can be seen that in the case of Comparative Example 1, in which uniaxial press-molding was not applied, a dense carbon layer was not formed inside a material, and it can be seen that as a compression pressure increases, internal pores of the material tend to decrease. In the case of Comparative Example 4, although it is generally comprised of a dense structure, it was confirmed that internal cracks were formed within the particles during pulverizing.

FIG. 2 is a graph illustrating particle strength of respective Examples. Looking FIG. 2, it can be seen that the particle strength increases as the pressure during press-molding increases. Meanwhile, in the case of Comparative Example 1, to which uniaxial press-molding was not applied, the particle strength was not measured.

As shown in the results of measuring a specific surface area in Table 3, it can be confirmed that the specific surface area tends to decrease as the uniaxial press-molding pressure increases. Such a trend is attributed to the formation of a dense first amorphous carbon layer and is in consistent with the observation results in FIG. 1. Meanwhile, in the case of Comparative Example 4, the specific surface area increased to 5.57 m²/g even if the pressure during press-molding is the highest, which was determined that the surface area was increased because the cracks within the particles were exposed externally.

In addition, looking at the results of pore distribution in FIG. 3, it can be seen that micropores were observed in a range of 2 to 3 nm in Comparative Examples 1 and 2. As the pressure increased, the pore size decreased, however, in the case of Comparative Example 4, it was confirmed that pores were observed near a range of 6 to 7 nm, deviating from this trend. As described above, it is presumed that internal cracks were formed during particle pulverizing as the particle strength increases, and consequently, voids are formed.

In summary, in the case of Comparative Examples 1 to 3, as the pressure during press-molding fell short of the range proposed in the present disclosure, micropores were remained, and consequently, a high-density carbon layer could not be secured. As a result, as shown in Table 3 above, the lifespan characteristics and expansion characteristics were poor.

In the case of Comparative Example 4, as the pressure during press-molding exceeded the range proposed in the present disclosure, cracks were formed within the particles during pulverizing, and consequently, the specific surface area increased, making it impossible to secure excellent electrochemical performance.

On the other hand, in the case of Inventive Example, in which an appropriate level of pressure was applied during press-molding and a size of pores, initially measured through the analysis of pore distribution exceeded 10 nm, a pitch, silicon nanoparticles, carbon nanotubes, and crystalline carbon may be bound together as much as possible at a certain pressure before carbonization, and as a result, as a dense carbon layer was secured during carbonization, excellent capacity and lifespan characteristics could be secured.

### (Example 2)

A negative electrode material was prepared in the same order and under the same conditions as Inventive Example in the (Example 1) above, except for a difference in a content of carbon nanotubes added to silicon nanoparticles, and after preparing an electrode using the negative electrode material, the electrochemical performance was evaluated and was shown in Table 4 below. In this case, a method of evaluating the electrochemical performance is the same as in the (Example 1) above.

**[Table 4]**

| Classification | CNT content (weight %) | Specific surface area(m²/g) | Discharge capacity (mAh/g) | Initial efficiency (%) | Lifespan (%) | Expansion rate (%) |
|---|---|---|---|---|---|---|
| Example 2-1 | 0.00% | 3.88 | 559 | 90.4 | 82.4 | 60.4 |
| Example 2-2 | 0.10% | 3.87 | 558 | 90.2 | 82.9 | 60.1 |
| Example 2-3 | 0.20% | 3.94 | 558 | 90.1 | 84.7 | 59.2 |
| Example 2-4 | 0.50% | 4.03 | 554 | 90.2 | 87.1 | 56.7 |
| Example 2-5 | 0.70% | 4.22 | 551 | 89.4 | 85.1 | 57.1 |
| Example 2-6 | 1.00% | 4.98 | 548 | 89.1 | 84.1 | 57.4 |

Looking at Examples 2-1 to 2-4 in Table 4 above, it can be seen that increasing a content of carbon nanotubes helps to ensure excellent lifespan characteristics. However, when the carbon nanotubes are included in an amount exceeding 0.60%, it can also be confirmed that the carbon nanotubes were not distributed on first amorphous carbon, and a specific surface area thereof was increased. In addition thereto, in the case of Examples 2-5 and 2-6, as described above, it was confirmed that the carbon nanotubes that were not distributed in the first amorphous carbon underwent a self-reaction, thereby having a negative effect on capacity, efficiency, and lifespan characteristics thereof.

Therefore, through the experiment described above, it can be seen that carbon nanotubes need to be added at an appropriate level to manufacture a negative electrode material with excellent performance, and it can be seen that it is preferable that the carbon nanotubes are added within the negative electrode material in an amount of 0.60 wt% or less, so that the carbon nanotubes are distributed within a first amorphous carbon.

## Claims

1. A negative electrode material for a lithium secondary battery, comprising a silicon-carbon composite including:
silicon nanoparticles;
crystalline carbon;
carbon nanotubes; and
first amorphous carbon,
wherein the silicon nanoparticles, the crystalline carbon, and the carbon nanotubes are dispersed in the first amorphous carbon, and
a minimum pore size inside the composite is greater than 10 nm and is less than or equal to 30 nm.

2. The negative electrode material for a lithium secondary battery of claim 1, wherein the crystalline carbon is at least one of artificial graphite, flake graphite, amorphous graphite, CNTs, and graphene.

3. The negative electrode material for a lithium secondary battery of claim 1, wherein the carbon nanotubes are included in an amount of 0.10 wt% or more and 0.60 wt% or less with respect to a total weight of the negative electrode material.

4. The negative electrode material for a lithium secondary battery of claim 1, wherein a specific surface area of the carbon nanotubes is 500 m²/g or more and 800 m²/g or less.

5. The negative electrode material for a lithium secondary battery of claim 1, wherein bulk density of the carbon nanotubes is 0.04 g/cc or more and 0.09 g/cc or less.

6. The negative electrode material for a lithium secondary battery of claim 1, wherein the first amorphous carbon is carbonized pitch having a ratio of fixed carbon of 30% or more and a beta-resin value of 15% or more.

7. The negative electrode material for a lithium secondary battery of claim 1, further comprising:
a second amorphous carbon layer having the silicon-carbon composite as a core, and covering a surface of the silicon-carbon composite.

8. The negative electrode material for a lithium secondary battery of claims 1 to 7, wherein the negative electrode material has a specific surface area of less than 6 m²/g.

9. A method of manufacturing a negative electrode material for a lithium secondary battery, comprising:
preparing silicon nanoparticles;
obtaining a mixture by adding crystalline carbon, carbon nanotubes, and pitch to the silicon nanoparticles, followed by mixing;
obtaining a molded body by press-molding the mixture;
carbonizing the molded body; and
pulverizing and classifying the molded body,
wherein the press-molding is performed at a pressure of 0.40 ton/cm² or more and less than 0.90 ton/cm².

10. The method of manufacturing a negative electrode material for a lithium secondary battery of claim 9, wherein the crystalline carbon is at least one of artificial graphite, flake graphite, amorphous graphite, CNTs, and graphene.

11. The method of manufacturing a negative electrode material for a lithium secondary battery of claim 9, wherein the pitch has a ratio of fixed carbon of 30% or more and a beta-resin value of 15% or more.

12. The method of manufacturing a negative electrode material for a lithium secondary battery of claim 9, wherein the mixing is performed through a milling process mediated by contact with powder.

13. The method of manufacturing a negative electrode material for a lithium secondary battery of claim 9, wherein the pulverizing is a dry pulverizing process.

14. The method of manufacturing a negative electrode material for a lithium secondary battery of claim 9, further comprising an operation of:
carbon coating a surface of the manufactured negative electrode material.
